# Europäisches Patentamt

## European Patent Office
## Office européen des brevets

(11) Veröffentlichungsnummer: **0 152 966**
A2

(12) # EUROPÄISCHE PATENTANMELDUNG

(21) Anmeldenummer: **85200002.5**

(22) Anmeldetag: **02.01.85**

(51) Int. Cl.⁴: **A 01 C 23/00**, B 60 P 1/02

(30) Priorität: **14.01.84 DE 3401190**

(43) Veröffentlichungstag der Anmeldung: **28.08.85**
**Patentblatt 85/35**

(84) Benannte Vertragsstaaten: **BE FR GB NL**

(71) Anmelder: **Veltink, Evert Jan, Puntweg 3, NL-7695 ZT Bruchterveld (NL)**

(72) Erfinder: **Veltink, Evert Jan, Puntweg 3, NL-7695 ZT Bruchterveld (NL)**

(54) **Fahrbarer Zwischenbehälter zum Ausbringen von pumpfähigen Düngestoffen.**

(57) Die Erfindung bezieht sich auf ein Verfahren zum Ausbringen von pumpfähigen Düngestoffen auf landwirtschaftlichen oder forstwirtschaftlichen Nutzflächen, wobei das auszubringende Medium mittels strassengängiger Transportfahrzeuge von seinem Anfall- oder Lagerort bis in den Bereich der landwirtschaftlichen oder forstwirtschaftlichen Nutzfläche verbracht, dort das pumpfähige Medium in einen Zwischenbehälter umgepumpt und aus dem Zwischenbehälter in kleinere, auf landwirtschaftlichen oder forstwirtschaftlichen Nutzflächen verfahrene, d.h. geländegängige Tankfahrzeuge umgefüllt und mittels diesen kleineren Tankfahrzeugen auf die Nutzfläche ausgebracht wird.

ACTORUM AG

P 34 o1 19o.o-23
Veltink

Veltink, Evert, Jan, Puntweg 3,
NL-7695 TP Bruchterveld

"Fahrbarer Zwischenbehälter zum Ausbringen von
pumpfähigen Düngestoffen"

Die Erfindung bezieht sich auf einen fahrbaren
Zwischenbehälter zum Ausbringen von pumpfähigen
Düngestoffen gemäß dem Oberbegriff des Hauptanspruches.

In der Zeitschrift "Landmaschinenmarkt, Würzburg",
9. März 1972, Seite 1o und 11 wird ein gattungsbildender fahrbarer Zwischenbehälter als Pufferbehälter beschrieben, der ein Fassungsvermögen von
etwa 2ooo l aufweist. Die von dem Pufferbehälter
getragenen Tanks können von einem weiteren Zwischentransportfahrzeug befüllt werden, das ein größeres
Fassungsvermögen als der Pufferbehälter aufweist
und daher mehrere Pufferbehälter beschicken kann.
Das Ausbringen der Flüssigkeit erfolgt über Pflanzenschutzspritzen, d.h. also relativ kleine Flüssigkeitsbehälter tragende Fahrzeuge.

Demgegenüber liegt der Erfindung die Aufgabe zugrunde, einen Pufferbehälter zu schaffen, der
zwischen die heute üblichen sehr großen straßengängigen Fahrzeuge und den eigentlichen, auf den
Nutzflächen verfahrbaren geländegängigen Fahrzeugen
eingeschaltet wird, wobei dieser Pufferbehälter·
die in ihm gespeicherte Flüssigkeit an das geländegängige Fahrzeug abgeben muß und gleichzeitig für
eine Mischung des Inhaltes sorgen soll.

Diese der Erfindung zugrundeliegende Aufgabe wird durch die Merkmale des kennzeichnenden Teiles des Hauptanspruches gelöst.

Dadurch, daß der Zwischenbehälter eine Größe aufweist, die mindestens dem Fassungsvermögen des straßengängigen Transportfahrzeuges entspricht, wird ein echter Pufferbehälter geschaffen, der in der Lage ist, zum Beispiel eine sehr große Güllemenge aufzunehmen, die dann aber aufeinanderfolgend von dem geländegängigen oder den geländegängigen Fahrzeugen ausgebracht wird. Die an dem Zwischenbehälter vorgesehene Förderpumpe ermöglicht die Abgabe des Inhalts des Zwischenbehälters an das geländegängige Fahrzeug und ermöglicht auch eine Durchmischung des Behälterinhaltes.

Vorteilhafte Ausgestaltungen der Lehre des kennzeichnenden Teiles des Hauptanspruches sind in den Unteransprüchen erläutert.

Ein Ausführungsbeispiel der Erfindung wird nachfolgend anhand der Zeichnungen erläutert.

Die Zeichnungen zeigen dabei in

Fig. 1     eine Seitenansicht eines Zwischenbehälters, in

Fig. 2     eine Draufsicht auf einen Zwischenbehälter, in

Fig. 3     eine Ansicht auf die Frontseite des Zwischenbehälters bei abgenommener Deichsel und in

Fig. 4     eine Ansicht auf die Rückseite des Zwischenbehälters.

- 3 -

In den Zeichnungen ist allgemein mit 1 ein Zwischenbehälter bezeichnet, der aus einem beispielsweise
70 m$^3$ fassenden Stahltank besteht.
Die Bodenseite 2 des Zwischenbehälters 1 wird von
entsprechende Tragfähigkeit aufweisenden I-Metallprofilen 3 getragen.

An der Frontseite des Zwischenbehälters ist eine
Zugdeichsel 4 angeordnet, die über Hydraulikzylinder 5 und 6 in ihrer Höhenlage einstellbar ist.

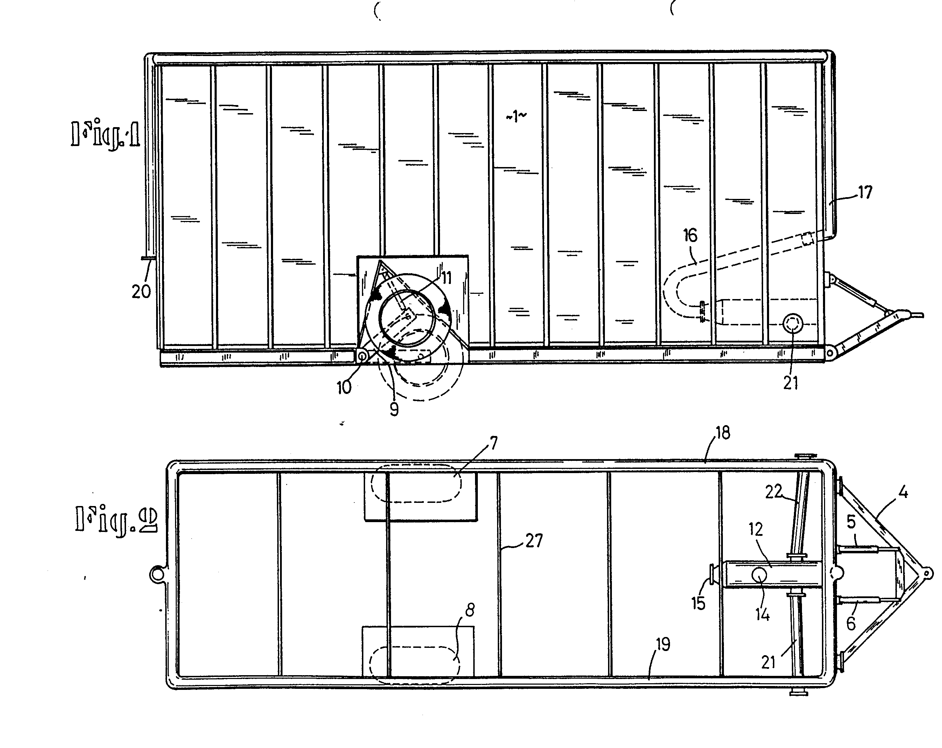

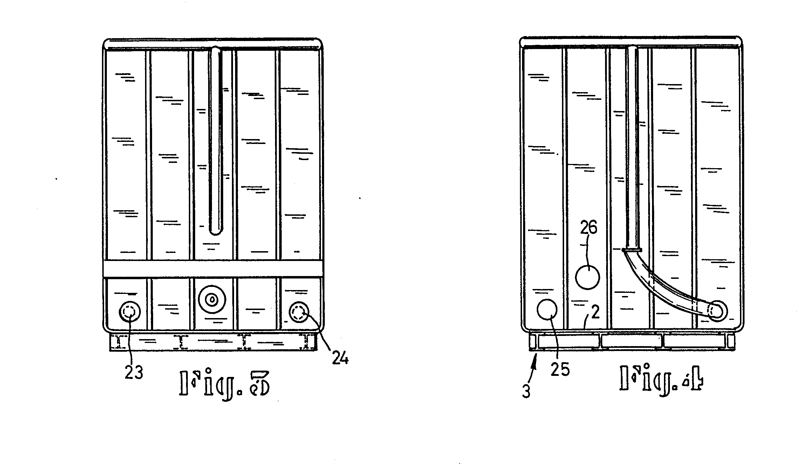

In der Längsachse des Zwischenbehälters 1 gesehen
im rückwärtigen Teil des Zwischenbehälters ist
ein Radpaar mit den beiden Laufrädern 7 und 8 angeordnet. Die Räder 7 und 8 sind jeweils an einem
Radlenker 9 befestigt, wobei der Radlenker 9 um
eine Schwenkachse 10 an den Bodenträgern 3 festgelegt ist. Der Radlenker kann in seiner Höhenlage
über einen Hydraulikzylinder 11 verstellt werden,
so dass damit das Rad in die in Fig. 1 dargestellte
Ruhelage oder in die in Fig. 1 dargestellte Arbeitslage verstellbar ist.

Zum Verfahren des Zwischenbehälters 1 wird durch
Absenken der Radlenker 9 das Laufrad 7 bzw. 8 in
die Arbeidslage verstellt, so dass damit der
Zwischenbehälter, insbesondere wenn er leer ist,
problemlos verfahrbar ist. Im Einsatzbereich des
Zwischenbehälters 1 werden die Räder dann hochgeschwenkt, so dass der Zwischenbehälter auf den
I-Metallprofilen 3 bodenseitig aufruht.

– 4 –

Innerhalb des Zwischenbehälters ist im vorderen Bereich und im Bodenbereich desselben eine Förderpumpe 12 angeordnet, die als an sich bekannte und insbesondere zum Fördern von pumpfähigen zähen Massen dienende Verdrängerpumpe ausgebildet ist. Die Förderpumpe 12 weist eine Ansaugöffnung 14 auf und es kann an ihrer Abgabeseite 15 an einen Verbindungsschlauch 16 angeschlossen werden, der zu einem Rohrleitungssystem 17 führt, das im oberen Bereich des Behälters sich in die Leitungen 18 und 19 teilt, die dann im rückwärtigen Bereich des Behälters zur Abgabeöffnung 20 führen. Weitere Anschlussstutzen 21 und 22 stehen mit der Förderpumpe 12 in Verbindung und münden an der Aussenseite der Behälterseitenwandungen, so wie dies deutlich in Fig. 1 erkennbar ist.

Zusätzliche Anschlussöffnungen oder Anschlussflansche können bei 23, 24, 25 und 26 vorgesehen sein.

Mit einer solchen Anordnung ist der Zwischenbehälter nahezu von allen Seiten zugänglich, so dass sowohl das Befüllen als auch das Entleeren des Zwischenbehälters problemlos möglich ist.

Vorzugsweise besteht der Zwischenbehälter aus einem rechteckigen, langgestreckten Stahlbehälter, wobei die Seitenwände dieses Zwischenbehälters durch Zugstangen 27 miteinander verbunden sein können, die geeignet sind, den erheblichen Druck des Füllmediums auf die inneren Seiten der Seitenwände aufzunehmen.

P 34 o1 19o.o-23
Veltink

Veltink, Evert, Jan, Puntweg 3,
NL - 7695 TP Bruchterveld

"Fahrbarer Zwischenbehälter zum Ausbringen von
pumpfähigen Düngestoffen"

Patentansprüche:

1. Fahrbarer Zwischenbehälter zum Ausbringen von pumpfähigen Düngestoffen, wie Gülle, Klärschlamm, Kalklaugen od.dgl., auf land- und forstwirtschaftlichen Nutzflächen, der von einem straßengängigen Transportfahrzeug befüllbar ist, dadurch gekennzeichnet, daß der Zwischenbehälter (1) ein Fassungsvermögen mindestens so groß wie das Fassungsvermögen des straßengängigen Transportfahrzeuges und eine Förderpumpe (12) aufweist und daß er mit Anschlußstutzen zum Anschluß von Befüll- und Entleerungsschläuchen ausgerüstet ist.

2. Zwischenbehälter nach Anspruch 1, dadurch gekennzeichnet, daß an einer Stirnseite des

- 2 -

Zwischenbehälters (1) eine in ihrer Höhenlage einstellbare Zugdeichsel (4) angeordnet ist.

3. Zwischenbehälter nach Anspruch 1, dadurch gekennzeichnet, daß die Förderpumpe (12) als Verdrängerpumpe ausgebildet ist, deren Anordnung und Ausrichtung im Bereich des Bodens (2) des Zwischenbehälters (1) derart ist, daß bei Betrieb der Förderpumpe (12) ohne Anschluß eines Entleerungsschlauches eine Umwälzbewegung des in dem Zwischenbehälter gelagerten Mediums erreichbar ist.

4. Zwischenbehälter nach Anspruch 1, dadurch gekennzeichnet, daß ein Radpaar (7, 8) in Längsachse des Zwischenbehälters gesehen außermittig im rückwärtigen Bereich des Zwischenbehälters (1) angeordnet ist.

5. Zwischenbehälter nach Anspruch 4, dadurch gekennzeichnet, daß jedes Rad (7, 8) des Radpaares von einem schwenkbar, am Zwischenbehältergrundgestell angeordneten Radlenker (9) getragen wird, der um seine Schwenkachse (1o) höhenmäßig verstellbar ist, um derart das von ihm getragene Rad in eine Arbeitsstellung oder eine Ruhestellung zu verbringen, wobei in der Ruhestellung das Rad oberhalb der Unterkante des Zwischenbehälters steht.

6. Zwischenbehälter wenigstens nach Anspruch 2 und 5, dadurch gekennzeichnet, daß die Zugdeichsel (4) und/oder die Radlenker (9) hydraulisch verstellbar sind.

0152966
- 3 -

7. Zwischenbehälter nach Anspruch 1, dadurch gekennzeichnet, daß der Zwischenbehälter (1) aus einer Stahlkonstruktion besteht und der Boden (2) des Zwischenbehälters (1) von einer Vielzahl in Längsrichtung des Zwischenbehälters verlaufenden I-Metallprofilen (3) getragen wird.

8. Zwischenbehälter nach Anspruch 1, dadurch gekennzeichnet, daß der Zwischenbehälter (1) als rechteckiger, nach oben offener Behälter ausgebildet ist.

9. Zwischenbehälter nach Anspruch 7, gekennzeichnet durch etwa in der mittleren Höhe des Zwischenbehälters (1) angeordnete, die beiden Seitenwände des Zwischenbehälters (1) verbindende Zugstangen (27).

10. Zwischenbehälter nach einem oder mehreren der vorhergehenden Ansprüche, dadurch gekennzeichnet, daß an mehreren Umfangswänden des Zwischenbehälters Anschlußflansche zum Anschluß von Befüll- oder Entleerungsschläuchen vorgesehen sind.

11. Zwischenbehälter nach Anspruch 1, dadurch gekennzeichnet, daß die im vorderen Bereich des Zwischenbehälters (1) angeordnete Förderpumpe (12) über eine anschließbare Leitung (16) eine Förderung des pumpfähigen Mediums bis in den rückwärtigen Bereich des Zwischenbehälters (1) ermöglicht.

Fig.1

Fig.2

0152966

Fig. 4

Fig. 5